(19) Europäisches Patentamt
European Patent Office
Office européen des brevets

(11) **EP 3 163 043 B1**

(12) **EUROPÄISCHE PATENTSCHRIFT**

(45) Veröffentlichungstag und Bekanntmachung des Hinweises auf die Patenterteilung:
**05.09.2018 Patentblatt 2018/36**

(51) Int Cl.:
***F01N 3/20*** *(2006.01)*

(21) Anmeldenummer: **16195053.0**

(22) Anmeldetag: **21.10.2016**

(54) **VORRICHTUNG ZUR ABGABE VON REAKTIONSMITTEL IN DEN ABGASSTROM EINER BRENNKRAFTMASCHINE**

DEVICE FOR DISPENSING OF REAGENT IN THE WASTE GAS FLOW OF A COMBUSTION ENGINE

DISPOSITIF DE DISTRIBUTION DE RÉACTIF DANS LE FLUX DE GAZ D'ÉCHAPPEMENT D'UN MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.10.2015 DE 102015118572**

(43) Veröffentlichungstag der Anmeldung:
**03.05.2017 Patentblatt 2017/18**

(73) Patentinhaber: **Eberspächer Exhaust Technology GmbH & Co. KG**
**66539 Neunkirchen (DE)**

(72) Erfinder: **Gaiser, Gerd**
**72768 Reutlingen (DE)**

(74) Vertreter: **RLTG**
**Ruttensperger Lachnit Trossin Gomoll**
**Patent- und Rechtsanwälte**
**Postfach 20 16 55**
**80016 München (DE)**

(56) Entgegenhaltungen:
WO-A1-00/79108     DE-A1- 10 346 220
DE-A1-102013 211 182     DE-A1-102013 225 938
US-A1- 2007 068 525     US-A1- 2011 179 772

EP 3 163 043 B1

**Beschreibung**

Die vorliegende Erfindung betrifft eine Vorrichtung zur Abgabe von Reaktionsmittel in den Abgasstrom einer Brennkraftmaschine, umfassend eine Reaktionsmitteleinspritzanordnung, eine Reaktionsmittelförderanordnung zum Fördern von Reaktionsmittel aus einem Reaktionsmittelreservoir zu der Reaktionsmitteleinspritzanordnung, eine Heizanordnung zum Erwärmen von durch die Reaktionsmittelförderanordnung zu der Reaktionsmitteleinspritzanordnung gefördertem Reaktionsmittel sowie eine Ansteueranordnung zum Ansteuern der Reaktionsmittelförderanordnung, der Heizanordnung und der Reaktionsmitteleinspritzanordnung.

Aus der DE 10 2006 049 591 A1 ist eine Vorrichtung zur Abgabe von Reaktionsmittel in den Abgasstrom einer Brennkraftmaschine gemäß dem Oberbegriff des Anspruchs 1 bekannt. Das durch diese Vorrichtung abzugebende Reaktionsmittel ist eine Harnstofflösung. Um mittels einer Reaktionsmittelförderanordnung zu einer Reaktionsmitteleinspritzanordnung geförderte Harnstofflösung möglichst effizient mit dem Abgasstrom zu vermischen, wird bei dieser bekannten Vorrichtung das in Richtung zur Reaktionsmitteleinspritzanordnung geförderte Reaktionsmittel erwärmt, beispielsweise auf eine Temperatur von etwa 200°C. Gleichzeitig wird das vor Abgabe in den Abgasstrom in flüssiger Form zugeführte Reaktionsmittel unter derart hohen Druck gesetzt, dass eine Reaktionsmittelverdampfung vor dem Abgeben des Reaktionsmittels in den Abgasstrom nicht auftreten kann. Eine derartige Vorrichtung nutzt den Effekt, dass bei der Abgabe des erwärmten und zunächst unter erhöhtem Druck stehenden Reaktionsmittels in den Abgasstrom eine spontane Entspannung auftritt, was einerseits zu einer spontanen Reaktionsmittelverdampfung führt, andererseits zu sehr feinen Reaktionsmitteltröpfchen des nicht spontan verdampften Anteils des Reaktionsmittels führt, wodurch eine sehr effiziente und feine Durchmischung des Reaktionsmittels mit dem in einem Abgasführungssystem strömenden Abgas einer Brennkraftmaschine erreicht wird.

Aus der DE 10 2013 211 182 A1 ist eine Einspritzvorrichtung zum Einspritzen eines Reduktionsmittel in einen Abgasstrang eines Verbrennungsmotors bekannt. Bei dieser bekannten Einspritzeinrichtung ist stromabwärts einer als Reaktionsmittelförderanordnung wirksamen Fluidmittelpumpe und stromaufwärts eines Einspritzventils ein Druckspeicher für das zu fördernde Reduktionsmittel vorgesehen.

Die DE 103 46 220 A1 offenbart eine Vorrichtung zur Abgabe von Reaktionsmittel. Das durch eine Reaktionsmittelförderanordnung aus einem Reaktionsmitteltank geförderte Reaktionsmittel wird über eine Druckspeicheranordnung zu einer Reaktionsmitteleinspritzanordnung gefördert.

Die US 2011/0179772 A1 offenbart eine Vorrichtung zur Abgabe von Reaktionsmittel mit einer zwischen einer Reaktionsmittelförderanordnung und einer Reaktionsmitteleinspritzanordnung angeordneten Druckspeicheranordnung. Die Druckspeicheranordnung umfasst einen Speicherbehälter, dessen Innenraum durch eine Membran in zwei Raumbereiche unterteilt ist. In einem der Raumbereiche ist Gas als ein kompressibles Medium enthalten. In den anderen Raumbereich kann von der Reaktionsmittelförderanordnung zu der Reaktionsmitteleinspritzanordnung strömendes Reaktionsmittel eintreten.

Es ist die Aufgabe der vorliegenden Erfindung, eine Vorrichtung zur Abgabe von Reaktionsmittel in den Abgasstrom einer Brennkraftmaschine bereitzustellen, mit welcher bei konstruktiv einfacher Ausgestaltung eine effiziente Durchmischung des Reaktionsmittels mit dem dieses aufnehmenden Abgas einer Brennkraftmaschine erreicht werden kann.

Gemäß der vorliegenden Erfindung wird diese Aufgabe gelöst durch eine Vorrichtung zur Abgabe von Reaktionsmittel in den Abgasstrom einer Brennkraftmaschine gemäß Anspruch 1. Diese umfasst eine Reaktionsmitteleinspritzanordnung, eine Reaktionsmittelförderanordnung zum Fördern von Reaktionsmittel aus einem Reaktionsmittelreservoir zu der Reaktionsmitteleinspritzanordnung, eine Heizanordnung zum Erwärmen von durch die Reaktionsmittelförderanordnung zu der Reaktionsmitteleinspritzanordnung gefördertem Reaktionsmittel sowie eine Ansteueranordnung zum Ansteuern der Reaktionsmittelförderanordnung, der Heizanordnung und der Reaktionsmitteleinspritzanordnung.

Dabei ist stromabwärts der Reaktionsmittelförderanordnung eine Druckspeicheranordnung vorgesehen. Die Druckspeicheranordnung umfasst ein in einer Abgabekammer der Reaktionsmitteleinspritzanordnung vorgesehenes, kompressibles Druckspeicherelement

Ferner kann stromabwärts der Reaktionsmittelförderanordnung ein Überdruckventil vorgesehen sein.

Durch die Erwärmung des Reaktionsmittels vermittels der Heizanordnung auf eine Temperatur, die bei Normalbedingungen, also unter Normaldruck, eine Verdampfung des Reaktionsmittels zur Folge hätte, kann der vorangehend beschriebene Effekt der spontanen Verdampfung bzw. der Erzeugung eines sehr feinen Reaktionsmittelsprays bei Abgabe aus der Reaktionsmitteleinspritzanordnung genutzt werden. Infolgedessen kann eine derartige Vorrichtung bereits auch bei vergleichsweise niedrigen Abgastemperaturen zum Einsatz gebracht werden, welche ansonsten für eine ausreichende Reaktionsmittelverdampfung nicht geeignet wären. Auch wird bei Einsatz der erfindungsgemäßen Vorrichtung eine verbesserte Umsetzung eines beispielsweise als Harnstoff/Wasser-Lösung ausgebildeten Reaktionsmittels zu Ammoniak erreicht, verbunden mit einer verbesserten NOx-Umwandlung und einem geringeren Verbrauch des Reaktionsmittels bei gleichzeitig ermöglichtem geringeren Volumen eines im Abgasführungssystem der Verbrennungsabgase einer Brennkraftmaschine vorgesehenen Katalysators. Durch die neben der spontanen Reaktionsmittelverdampfung auftretende Erzeugung sehr feiner Reaktionsmitteltröpfchen wird aufgrund des besseren Oberfläche/Volumen-Verhältnisses auch eine schnellere Abdampfung des in Tröpfchenform abgegebenen Reaktionsmittels erreicht, da die aufzuheizende Masse der Tröpfchen proportional zu deren Volumen ist. Weitere die Durchmischung des Reaktionsmittels mit dem im Abgasstrom geführten Abgasen unterstützende technische Maßnahmen, wie z. B. eine Druckluftunterstützung bei der Sprayerzeugung oder die Durchmischung vermittels im Abgasstrom vorgesehener Mischelemente, können somit zumindest teilweise entfallen.

Von besonderer Bedeutung ist dabei, dass bei der erfindungsgemäßen Vorrichtung bauliche Maßnahmen vorgesehen sind, die die Qualität der Abgabe von Reaktionsmittel in den Abgasstrom substantiell verbessern. Bei Bereitstellen eines Überdruckventils wird gewährleistet, dass am Beginn einer Abgabephase immer definierte Druckverhältnisse vorliegen, welche eine entsprechend definierte Abgabe von Reaktionsmittel über die Reaktionsmitteleinspritzanordnung zur Folge haben. Da durch das Bereitstellen des Überdruckventils auch während Nicht-Abgabephasen die Reaktionsmittelförderanordnung betrieben werden kann, um einerseits den gewünschten Reaktionsmitteldruck aufzubauen bzw. aufrechtzuerhalten, andererseits aber durch die Wirkung des Überdruckventils eine übermäßige Druckerhöhung zu vermeiden, ist es nicht erforderlich, am Beginn einer Abgabephase, bedingt durch den dabei auftretenden Druckabfall im Leitungsbereich stromabwärts der Reaktionsmittelförderanordnung, eine nur mit Verzögerung einsetzende Erhöhung der Förderrate der Reaktionsmittelförderanordnung auszulösen. Diese kann grundsätzlich so betrieben werden, dass bei dem Übergang in eine Abgabephase ausreichend Reaktionsmittel nachgefördert werden kann, um einerseits die gewünschte Reaktionsmittelmenge in den Abgasstrom abgeben zu können, andererseits aber einen übermäßigen Druckabfall, insbesondere einen Druckabfall unter dem Dampfdruck des Reaktionsmittels, zu vermeiden.

Das Vorsehen einer Druckspeicheranordnung hat die Folge, dass während einer Abgabephase der Druck in dem stromabwärts der Reaktionsmittelförderanordnung liegenden Bereich, insbesondere im Bereich der Reaktionsmitteleinspritzanordnung, im Wesentlichen konstant auf einem Niveau gehalten werden kann, welches eine definierte Reaktionsmittelabgabe gewährleistet, auch wenn das durch die Reaktionsmittelförderanordnung während einer Abgabephase nachlieferbare Reaktionsmittelvolumen nicht vollständig ausreicht, um das während der Abgabephase in den Abgasstrom abgegebene Reaktionsmittel zu ersetzen.

In einer besonders vorteilhaften Ausgestaltung werden beide vorangehend beschriebenen technischen Maßnahmen, also das Vorsehen des Überdruckventils und das Vorsehen der Druckspeicheranordnung in Kombination realisiert, wenngleich jede dieser Maßnahmen für sich alleine bereits zu einem besonders vorteilhaft arbeitenden System beiträgt.

Bei der erfindungsgemäßen Vorrichtung kann die Reaktionsmittelförderanordnung eine Reaktionsmittelpumpe zum Fördern von Reaktionsmittel zu der Reaktionsmitteleinspritzanordnung umfassen, wobei die Reaktionsmittelpumpe dazu ausgebildet ist, einen über einem Dampfdruck des durch die Heizanordnung erwärmten Reaktionsmittels liegenden Reaktionsmitteldruck zu erzeugen. Dabei ist die Reaktionsmittelpumpe vorzugsweise eine kontinuierlich fördernde Pumpe, beispielsweise eine Zahnradpumpe.

Vorteilhafterweise ist bei der erfindungsgemäßen Vorrichtung ein durch die Druckspeicheranordnung bereitgestelltes Reaktionsmittelpuffervolumen derart bemessen, dass folgende Bedingung erfüllt ist:

$$V_P > V_E - V_N$$

wobei:

$V_P$	das Reaktionsmittelpuffervolumen ist,

$V_E$	das bei einem Reaktionsmitteleinspritzvorgang durch die Reaktionsmitteleinspritzanordnung abgegebene Reaktionsmittelvolumen ist,

$V_N$	das bei einem Reaktionsmitteleinspritzvorgang durch die Reaktionsmittelförderanordnung nachgeförderte Reaktionsmittelvolumen ist.

Somit kann sichergestellt werden, dass das durch die Wirkung der Druckspeicheranordnung einerseits und die Wirkung der Reaktionsmittelförderanordnung andererseits während eines Einspritzvorgangs, also während einer Abgabephase bereitgestellte Reaktionsmittelvolumen ausreicht, um die gewünschte Reaktionsmittelmenge in das Abgas abgeben zu können.

Um bei der erfindungsgemäßen Vorrichtung die gewünschte Temperatur des Reaktionsmittels einerseits und den zum Verhindern eines Verdampfens des Reaktionsmittels erforderlichen Druck andererseits definiert einstellen zu können, wird weiter vorgeschlagen, dass die Ansteueranordnung zum Ansteuern der Heizanordnung auf Grundlage einer Reaktionsmitteltemperatur im Bereich der Heizanordnung oder/und der Reaktionsmittelabgabeanordnung oder/und auf Grundlage einer Soll-Reaktionsmitteltemperatur ausgebildet ist, oder/und zum Ansteuern der Reaktionsmittelförderanordnung auf Grundlage eines Reaktionsmitteldrucks im Bereich der Heizanordnung oder/und der Reaktionsmitteleinspritzanordnung oder/und auf Grundlage eines Soll-Reaktionsmitteldrucks.

Die vorliegende Erfindung betrifft ferner eine Abgasanlage für eine Brennkraftmaschine, umfassend einen Abgasführungskanal und eine erfindungsgemäße Vorrichtung zum Abgeben von Reaktionsmittel in in dem Abgasführungskanal strömendes Abgas.

Die vorliegende Erfindung wird nachfolgend mit Bezug auf die beiliegenden Figuren detailliert beschrieben. Es zeigt:

Fig. 1 in prinzipartiger Darstellung eine Vorrichtung zur Abgabe von Reaktionsmittel in den Abgasstrom einer Brennkraftmaschine;

Fig. 2 eine Schnittdarstellung einer Reaktionsmitteleinspritzanordnung der in Fig. 1 dargestellten Vorrichtung.

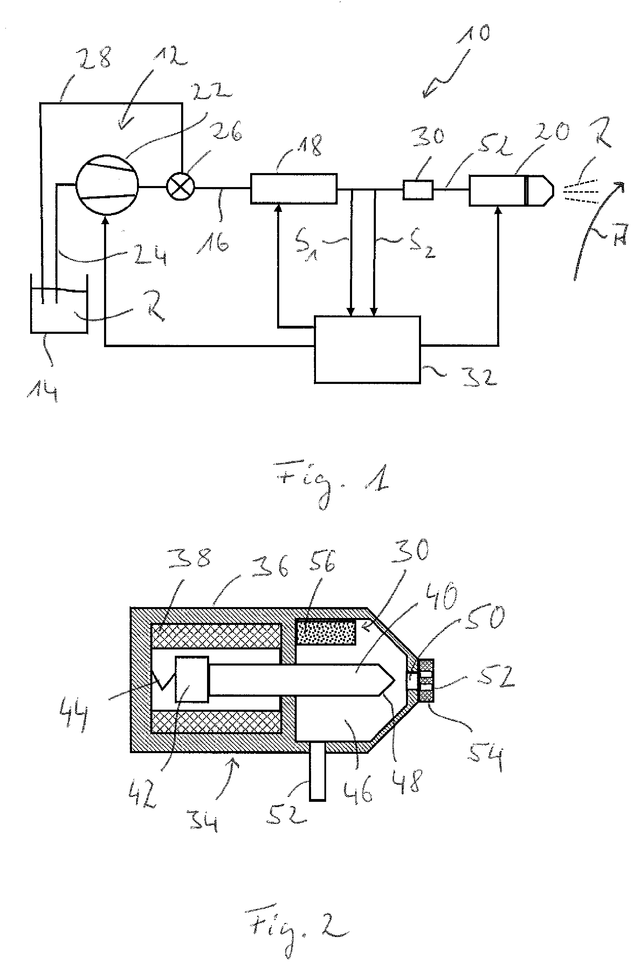

In Fig. 1 ist eine Vorrichtung zur Abgabe von Reaktionsmittel in den Abgasstrom einer Brennkraftmaschine allgemein mit 10 bezeichnet. Die Vorrichtung 10 umfasst eine Reaktionsmittelförderanordnung 12, vermittels welcher Reaktionsmittel R aus einem Reaktionsmittelreservoir 14, also beispielsweise einem Speicherbehälter, entnommen und über eine Reaktionsmittelleitung 16 zu einer beispielsweise elektrisch erregbaren Heizanordnung 18 gefördert werden kann. In der Heizanordnung 18 wird das vermittels der Reaktionsmittelförderanordnung 12 geförderte bzw. unter Druck gesetzte Reaktionsmittel R auf eine Überhitzungstemperatur erwärmt und zu einer Reaktionsmitteleinspritzanordnung 20 weitergefördert. Vermittels der Reaktionsmitteleinspritzanordnung wird das Reaktionsmittel R in den schematisch dargestellten und in einem Abgasführungskanal einer Abgasanlage einer Brennkraftmaschine geführten Abgasstrom A abgegeben bzw. eingespritzt.

Die Reaktionsmittelförderanordnung 12 umfasst eine Reaktionsmittelpumpe 22, die das Reaktionsmittel R aus dem Reaktionsmittelreservoir 14 über eine Zuführleitung 24 aufnimmt und über ein Überdruckventil 26 in die Reaktionsmittelleitung 16 und in Richtung zur Heizanordnung 18 fördert. Das Überdruckventil 26 gibt bei Erreichen eines Schaltdrucks einen Rückströmweg 28 zum Reaktionsmittelreservoir 14 frei, so dass dafür gesorgt ist, dass während des Betriebs der Reaktionsmittelpumpe 22 der Reaktionsmitteldruck in dem Strömungsbereich stromabwärts des Überdruckventils 26 den Schaltdruck im Wesentlichen nicht übersteigt. Die Reaktionsmittelpumpe 22 ist vorzugsweise als kontinuierlich arbeitende Pumpe, beispielsweise als Zahnradpumpe, aufgebaut, die grundsätzlich so betrieben werden kann, dass sie einen über dem Schaltdruck des Überdruckventils 26 liegenden Druck generieren könnte.

In Fig. 1 ist im Bereich zwischen der Heizanordnung 18 und der Reaktionsmitteleinspritzanordnung 20 eine Druckspeicheranordnung 30 symbolisch dargestellt. Die Funktionalität der Druckspeicheranordnung 30 zum Bereitstellen eines Reaktionsmittelpuffervolumens wird nachfolgend insbesondere auch mit Bezug auf die Fig. 2 noch beschrieben.

Die Vorrichtung 10 umfasst ferner eine Ansteueranordnung 32, welche dazu vorgesehen ist, die Reaktionsmittelförderanordnung 12, also insbesondere die Reaktionsmittelpumpe 22, die Heizanordnung 18 und die Reaktionsmitteleinspritzanordnung 20 anzusteuern. Dabei wird der Ansteueranordnung 22 über eine Signalleitung $S_1$ ein Drucksignal von einem oder mehreren Drucksensoren zugeführt, welches den Druck im Strömungsbereich stromabwärts des Überdruckventils 26, insbesondere im Bereich der Heizanordnung 18 oder/und der Reaktionsmitteleinspritzanordnung 20, wiedergibt. Über eine Signalleitung $S_2$ wird ein von einem oder mehreren Temperatursensoren geliefertes Temperatursignal in die Ansteueranordnung 32 eingeleitet, welches die Temperatur des Reaktionsmittels insbesondere im Bereich der Heizanordnung 18 oder/und der Reaktionsmitteleinspritzanordnung 20 anzeigt. Ferner können der Ansteueranordnung 32 weitere Informationen, wie z. B. über den Betriebszustand einer Brennkraftmaschine und somit auch die abgegebene Abgasmenge, zugeführt werden.

Die Ansteueranordnung 32, welche beispielsweise auch in ein Motorsteuergerät integriert sein kann, steuert die Heizanordnung 18 derart an, dass das Reaktionsmittel im Bereich der Heizanordnung 18 bzw. auch dem dann stromabwärts folgenden Leitungsbereich bzw. im Bereich der Reaktionsmitteleinspritzanordnung 20 in einem Bereich zwischen 100 °C und 370 °C liegt. Beispielsweise kann eine Solltemperatur für das Reaktionsmittel R in einem Bereich zwischen 120 und 300 °C, vorzugsweise 130 und 250 °C, am meisten bevorzugt zwischen 150 und 200 °C liegen. Die Solltemperatur des Reaktionsmittels kann selbstverständlich abhängig von dem einzusetzenden Reaktionsmittel gewählt werden. Vorzugsweise wird als Reaktionsmittel eine Harnstoff/Wasser-Lösung eingesetzt. Auch andere Arten von Reaktionsmittel, wie z. B. Denoxium oder Isocyansäure, können verwendet werden.

Um zu verhindern, das bei derartig hoher Temperatur des Reaktionsmittels R dieses bereits vor dem Abgeben aus der Reaktionsmitteleinspritzanordnung 20, also innerhalb der Vorrichtung 10, verdampft, wird die Reaktionsmittelpumpe 22 derart betrieben, dass in dem stromabwärts derselben liegenden Strömungsbereich des Reaktionsmittels R ein über einem Dampfdruck des Reaktionsmittels R bei der gewünschten Temperatur desselben liegender Reaktionsmitteldruck erreicht wird und beibehalten wird. Insbesondere ist auch der Schaltdruck des Überdruckventils 26 derart gewählt, dass dann, wenn dieser erreicht ist und somit ein weiterer Druckanstieg nicht mehr auftreten wird, der Reaktionsmitteldruck über dem Dampfdruck des Reaktionsmittels R liegt.

Zur Abgabe von Reaktionsmittel R vermittels der Reaktionsmitteleinspritzanordnung 20 steuert die Ansteueranordnung 32 eine in Fig. 2 prinzipartig dargestellte Elektromagnetanordnung 34 der Reaktionsmitteleinspritzanordnung 20 an. Diese umfasst eine in einem Gehäuse 36 angeordnete Elektromagnetspule 38 und einen mit einem Sperrorgan 40 bewegbaren Anker 42. Durch eine Vorspannfeder 44 ist die Sperrorgan-Anker-Baugruppe in Richtung Absperren einer Abgabekammer 46 im Gehäuse 36 vorgespannt. Dabei sitzt das Sperr-

EP 3 163 043 B1

organ 40 mit einem Spitzenbereich 48 am Rand einer im Gehäuse 36 ausgebildeten Öffnung 50 auf. Das über eine Leitung 52 beispielsweise von der Heizanordnung 18 zugeführte Reaktionsmittel kann in diesem Zustand nicht aus der Abgabekammer 46 austreten. Bei Erregung der Spulenanordnung 34 wird durch entsprechende elektromagnetische Wechselwirkung die Sperrorgan-Anker-Baugruppe in Richtung zu einer in Fig. 2 dargestellten Offenstellung verschoben, in welcher die Abgabekammer 46 über die Öffnung 50 offen ist und somit das unter Druck stehende Reaktionsmittel R durch die Öffnung 50 und eine Mehrzahl von Düsenöffnungen 52 einer allgemein mit 54 bezeichneten Abgabedüsenanordnung, auch als Spritzlochscheibe bezeichnet, nach außen abgegeben bzw. in das Abgas A eingespritzt wird. Die Dauer einer jeweiligen Abgabephase, also die Zeitdauer, während welcher in einem getakteten Betrieb das Sperrorgan 40 in seiner Offenstellung ist, bzw. das Verhältnis der Zeitdauern der Abgabephasen zu den Zeitdauern der Nicht-Abgabephasen, während welcher das Sperrorgan 40 in seiner Sperrstellung ist und somit eine Reaktionsmittelabgabe verhindert, kann in Abhängigkeit von der erforderlichen Reaktionsmittelmenge eingestellt werden. Die Reaktionsmitteleinspritzanordnung 20 wird durch die Ansteueranordnung 32 beispielsweise beruhend auf der erforderlichen Reaktionsmittelmenge zur Durchführung eines derartigen getakteten Betriebs mit alternierenden Abgabephasen und Nicht-Abgabephasen angesteuert.

Während einer Abgabephase fällt der zunächst im Bereich des Schaltdrucks des Überdruckventils 26 liegende Reaktionsmitteldruck im Bereich stromabwärts des Überdruckventils 26 und insbesondere im Bereich der Heizanordnung 18 bzw. der Reaktionsmitteleinspritzanordnung 20 unter den Schaltdruck des Überdruckventils 26 ab. Sobald der Schaltdruck unterschritten ist, schließt das Überdruckventil 26. Da die Reaktionsmittelpumpe 22 im Wesentlichen kontinuierlich betrieben wird, um zumindest den Schaltdruck aufrechtzuerhalten, ist auch am Beginn einer jeweiligen Abgabephase grundsätzlich keine Änderung im Betrieb der Reaktionsmittelpumpe 22 erforderlich. Die Reaktionsmittelpumpe 22 wird derart betrieben, dass auch bei in der Offenstellung positioniertem Sperrorgan 40, also während einer Abgabephase, der zunächst unter den Schaltdruck gefallene Reaktionsmitteldruck nicht unter einen unteren Grenzdruck abfallen kann, welcher beispielsweise im Bereich von 110 bis 120 % des Dampfdrucks des Reaktionsmittels R insbesondere im Bereich der Heizanordnung 18 bzw. der Reaktionsmitteleinspritzanordnung 20 liegen kann. Somit ist gewährleistet, dass auch während einer Abgabephase im Strömungsbereich stromabwärts des Überdruckventils 26 durch einen den unteren Grenzdruck nicht unterschreitenden Reaktionsmitteldruck eine Verdampfung des Reaktionsmittels noch in der Vorrichtung 10 selbst verhindert wird, gleichwohl ein ausreichend hoher und definierter Druck aufrechterhalten werden kann, um eine definierte Reaktionsmittelmenge in den Abgasstrom A einzuspritzen.

Bei dieser Ausgestaltung der Vorrichtung 10 wird also die Reaktionsmittelpumpe 22 derart ausgelegt und betrieben, dass sie dazu in der Lage ist, ein Absinken des Reaktionsmitteldrucks unter den unteren Grenzdruck zu vermeiden und dabei eine ausreichend große Reaktionsmittelmenge nachzuliefern, um die für eine jeweilige Abgabephase gewünschte Reaktionsmittelmenge in den Abgasstrom A abgeben zu können. Auch die in Fig. 1 dargestellte Druckspeicheranordnung 30 der Vorrichtung 10 führt unabhängig davon, ob das Überdruckventil 26 vorgesehen ist oder nicht, vorzugsweise jedoch in Kombination mit dem Überdruckventil 26, dazu, dass während einer jeweiligen Abgabephase der Reaktionsmitteldruck insbesondere im Bereich der Reaktionsmitteleinspritzanordnung 20 bzw. auch der Heizanordnung 18 auf einem hohen Niveau, beispielsweise im Bereich des Schaltdrucks des Überdruckventils 26 oder einem entsprechenden Druck, bleibt, in jedem Falle aber nicht unter den unteren Grenzdruck abfällt.

Die Druckspeicheranordnung 30 stellt ein Reaktionsmittelpuffervolumen bereit, also ein Volumen, in welchem während einer Nicht-Abgabephase, also bei in der Sperrstellung positioniertem Sperrorgan 40, Reaktionsmittel R unter Druck aufgenommen wird. Wird das Sperrorgan 40 in seine Offenstellung bewegt und Reaktionsmittel aus der Abgabekammer 46 über die Öffnung 50 abgegeben, kann Reaktionsmittel R aus dem durch die Druckspeicheranordnung 30 bereitgestellten Reaktionsmittelpuffervolumen das bereits über die Öffnung 50 abgegebene Reaktionsmittel R kompensieren bzw. kann der Reaktionsmitteldruck insbesondere auch im Bereich der Reaktionsmitteleinspritzanordnung 20 aufrechterhalten werden. Um dafür zu sorgen, dass ein substantieller Abfall des Reaktionsmitteldrucks während einer Abgabephase nicht auftritt, also der Reaktionsmitteldruck beispielsweise im Bereich des Schaltdrucks oder eines entsprechend hohen Drucks bleibt, in jedem Falle aber nicht unter den unteren Grenzdruck abfällt, ist das durch die Druckspeicheranordnung 30 bereitgestellte Reaktionsmittelpuffervolumen vorzugsweise derart bemessen, dass es größer ist als die Differenz zwischen dem während eines Reaktionsmitteleinspritzvorgangs, also einer Abgabephase, in den Abgasstrom A abgegebene Reaktionsmittelvolumen und dem durch die Reaktionsmittelförderanordnung während einer Abgabephase nachgeförderten Reaktionsmittelvolumen.

Ein erfindungsgemäßes Ausgestaltungsbeispiel der Druckspeicheranordnung 30 ist in Fig. 2 in prinzipartiger Weise dargestellt. Die dort gezeigte Druckspeicheranordnung 30 umfasst ein kompressibles, also bei Druckbelastung sein Volumen änderndes Druckspeicherelement 56. Dieses ist im Bereich der Abgabekammer 46 vorgesehen und kann somit einen Volumenausgleich insbesondere dort bereitstellen, wo Reaktionsmittel aus der Reaktionsmitteleinspritzanordnung 20 abgegeben wird. Beispielsweise kann das Druckspeicherelement 56 mit geschlossenzelligem Schaumstoffmaterial aufgebaut sein. Auch ein in einer flexiblen Hülle, beispielsweise aus Kunststoffmaterial, eingeschlossenes Gasvolumen kann die gewünschte Kompressibilität bereitstellen. Selbstverständlich können mehrere derartige kompressible Druckspeicherelemente 36 im Bereich der Reaktionsmitteleinspritzanordnung 20 oder/und auch in Bereichen stromaufwärts davon vorgesehen sein.

Bei einer nicht erfindungsgemäßen Ausgestaltungsanordnung kann die Druckspeicheranordnung 30 einen elastisch dehnbaren Leitungsbereich, also beispielsweise einen mit Gummimaterial oder ähnlich elastischem Material aufgebauten Leitungsabschnitt, umfassen. Dieser kann bei einem entsprechenden Druckanstieg gedehnt werden und während einer Abgabephase, also bei Auftreten eines Druckabfalls, sich wieder zusammenziehen und somit das bzw. einen Teil des abgegebenen Reaktionsmittelvolumens kompensieren.

Bei einer weiteren nicht erfindungsgemäßen Ausgestaltung kann die Druckspeicheranordnung 30 beispielsweise einen von der Leitung 52 oder der Reaktionsmittelleitung 16 abzweigenden Leitungsbereich mit einem durch eine Membran vom Reaktionsmittelstrom getrennten, abgeschlossenen Gasvolumen umfassen. Durch den Reaktionsmitteldruck kann diese Membran verformt werden und somit das in dem abgeschlossenen Volumen enthaltene Gas unter Druck setzen und komprimieren. Selbstverständlich sind auch Kombinationen verschiedener Druckspeicherelemente, welche jeweils ein Reaktionsmittelpuffervolumen bei Druckbeaufschlagung bereitstellen können, möglich.

Das Vorsehen der Druckspeicheranordnung 30 und somit das Bereitstellen eines Reaktionsmittelpuffervolumens hat weiter den Vorteil, dass die Vorrichtung 10 auch bei vergleichsweise niedrigen Temperaturen durch ein einfrierendes und dabei sich ausdehnendes Reaktionsmittel nicht beschädigt werden kann und somit ein Entleeren der Vorrichtung 10 nicht erforderlich ist. Das für das Ausdehnen des Reaktionsmittels bei vergleichsweise niedrigen Temperaturen erforderliche Volumen kann durch das Reaktionsmittelpuffervolumen der Druckspeicheranordnung 30 bereitgestellt werden.

Mit der vorangehend beschriebenen Vorrichtung wird es möglich, während der Nicht-Abgabephasen das Reaktionsmittel R insbesondere im Bereich der Heizanordnung 18 und der Reaktionsmitteleinspritzanordnung 20 auf einem Reaktionsmittel über dem Dampfdruck zu halten, wobei dieser Dampfdruck jeweils in Zuordnung zu einer im Bereich der Heizanordnung 18 jeweils bereitzustellenden Überhitzungstemperatur unter Berücksichtigung der Dampfdruckkurve eines jeweils eingesetzten Reaktionsmittels bestimmt werden kann. Während der Abgabephasen wird das unter erhöhtem Druck stehende Reaktionsmittel R in überhitztem Zustand aus der Reaktionsmitteleinspritzanordnung 20 abgegeben. Dabei tritt eine spontane Entspannung des Reaktionsmittels R auf, welche dazu führt, dass ebenso spontan ein Teil des Reaktionsmittels R verdampft, somit also in Dampfform in den Abgasstrom A eingeleitet wird.

Der verbleibende, also nicht verdampfte Teil des aus der Reaktionsmitteleinspritzanordnung 20 abgegebenen Reaktionsmittels R wird in Form sehr kleiner Tröpfchen mit einer Größe im Sub-Mikrometerbereich in den Abgasstrom A abgegeben. Diese geringe Tröpfchengröße unterstützt die schnelle Verteilung des Reaktionsmittels R im Abgasstrom einerseits und unterstützt andererseits die schnelle Verdampfung dieses zunächst noch in Tröpfchenform, also grundsätzlich in flüssiger Form vorliegenden Reaktionsmittels, da in jedem dieser Tröpfchen mit sehr geringer Größe nur ein sehr kleines Reaktionsmittelvolumen zu erwärmen und zu verdampfen ist. Aufgrund dieser spontan auftretenden Verdampfung bzw. der nachfolgend sehr schnell auftretenden Verdampfung des in Tröpfchenform abgegebenen Reaktionsmittels ist die Verweilzeit von flüssigem Reaktionsmittel im Bereich der Reaktionsmitteleinspritzanordnung 20 sehr kurz, so dass die Gefahr der Entstehung von Reaktionsnebenprodukten, die zu einer Beeinträchtigung der Funktionalität der Reaktionsmitteleinspritzanordnung 20 führen könnten, weitestgehend eliminiert ist. Auf eine Druckluftunterstützung zur Sprayerzeugung ist somit nicht erforderlich, und auch weitere zur Durchmischung des Reaktionsmittels mit dem Abgasstrom A eingesetzte Maßnahme, wie z. B. das Bereitstellen von Mischelementen im stromabwärtigen Bereich eines Abgasführungssystems, kann weitestgehend verzichtet werden.

Durch die erfindungsgemäß aufgebaute Vorrichtung, welche durch den Einsatz des Überdruckventils 26 oder den Einsatz der Druckspeicheranordnung 30 oder den gleichzeitigen Einsatz des Überdruckventils 26 und der Druckspeicheranordnung 30 auch während Abgabephasen für einen im Wesentlichen konstanten, jedenfalls nicht sehr stark abfallenden Reaktionsmitteldruck sorgen kann, wird eine definierte Abgabe von Reaktionsmittel unter Ausnutzung des vorangehend beschriebenen Effekts einer spontanen Verdampfung beim Austritt aus der Reaktionsmitteleinspritzanordnung 20 gewährleistet. Aufgrund der sehr gleichmäßigen Druckverhältnisse im Bereich der Reaktionsmitteleinspritzanordnung wird ein gleichmäßiger Sprühnebel des noch in Tröpfchenform abgegebenen Reaktionsmittels erzeugt, dessen Verteilung auch über die Dauer einer Abgabephase hinweg im Wesentlichen gleich bleibt. Dabei können an der vorangehend beschriebenen Vorrichtung 10 selbstverständlich im Umfang der vorliegenden Erfindung liegende bauliche Maßnahmen vorgesehen werden bzw. Änderungen vorgenommen werden. Beispielsweise kann die Heizanordnung 18 einen in einen Leitungsabschnitt integrierten Heizleiter, ggf. auch einen von dem Reaktionsmittel umströmbaren und somit in direkte thermische Wechselwirkung damit bringbaren Heizleiter umfassen, der unter Ansteuerung einer Ansteuervorrichtung erregbar ist, um das Reaktionsmittel insbesondere in dem Bereich nahe der Reaktionsmitteleinspritzanordnung 20 auf die Überhitzungstemperatur zu erwärmen. Ferner kann der Drucksensor im stromaufwärts der Heizanordnung 18 liegenden Bereich, also beispielsweise zwischen der Heizanordnung 18 und dem Überdruckventil, angeordnet sein. Auch eine Integration der Sensoren in die Heizanordnung 18 oder/und die Reaktionsmitteleinspritzanordnung 20 ist möglich.

Um auch bei Einsatz der erfindungsgemäßen Vorrichtung die Vermischung des in den Abgasstrom abgegebenen Reaktionsmittels mit dem Abgas zu verbessern, kann stromabwärts des Einspritzorts in der Abgasanlage, also im Abgaskanal, ein Element zur Sekundärdispergierung, also ein sogenanntes Mischelement, vorgesehen sein. Auf den Prallflächen eines derartigen Mischelements können die darauf auftreffenden Reaktionsmitteltröpfchen zerplatzen. Die erwärmten Oberflächen eines derartigen Mischelements unterstützen ferner die weitere Reaktionsmittelverdampfung. Um bei der Reaktionsmitteleinspritzanordnung eine Beeinträchtigung der Funktionalität der Elektromagnetanordnung durch die vergleichsweise hohe Reaktionsmitteltemperatur zu vermeiden, kann diese in einem von der Abgabekammer weiter entfernt liegenden Bereich angeordnet sein. Dazu kann auch beispielsweise das Sperrorgan mit vergleichsweise großer Länge ausgebildet sein. Auch kann die Reaktionsmitteleinspritzanordnung mit einer Schließpunkterkennung ausgebildet sein, um zu erkennen, wann das Sperrorgan auf dem Gehäuse 36 aufsitzt und die Öffnung 50 abschließt, um somit eine elektrische Kompensation einer thermisch bedingten Längenänderung des Sperrorgans durchzuführen. Auch eine mechanische Kompensation einer derartigen thermisch bedingten Längenänderung ist möglich.

Um weiterhin im Strömungsweg des Reaktionsmittels bei der Abgabe aus der Abgabekammer 46 das Volumen, in welchem noch vor dem Austreten in den Abgasstrom bereits eine Reaktionsmittelverdampfung auftritt, möglichst gering zu halten, könnte auf das Vorsehen der Abgabedüsenanordnung 54 verzichtet werden bzw. diese bereits durch entsprechende Ausgestaltung mit mehreren Öffnungen in das Gehäuse 36 integriert werden.

**Patentansprüche**

1. Vorrichtung zur Abgabe von Reaktionsmittel (R) in den Abgasstrom (A) einer Brennkraftmaschine, umfassend eine Reaktionsmitteleinspritzanordnung (20), eine Reaktionsmittelförderanordnung (12) zum Fördern von Reaktionsmittel (R) aus einem Reaktionsmittelreservoir (14) zu der Reaktionsmitteleinspritzanordnung (20), eine Heizanordnung (18) zum Erwärmen von durch die Reaktionsmittelförderanordnung (12) zu der Reaktionsmitteleinspritzanordnung (20) gefördertem Reaktionsmittel (R), eine Ansteueranordnung (32) zum Ansteuern der Reaktionsmittelförderanordnung (12), der Heizanordnung (18) und der Reaktionsmitteleinspritzanordnung (20), **dadurch gekennzeichnet, dass** stromabwärts der Reaktionsmittelförderanordnung (12) eine Druckspeicheranordnung (30) vorgesehen ist, wobei die Druckspeicheranordnung (30) ein in einer Abgabekammer (46) der Reaktionsmitteleinspritzanordnung (20) vorgesehenes, kompressibles Druckspeicherelement (56) umfasst.

2. Vorrichtung nach Anspruch 1, **dadurch gekennzeichnet, dass** die Reaktionsmittelförderanordnung (12) eine Reaktionsmittelpumpe (22) zum Fördern von Reaktionsmittel (R) zu der Reaktionsmitteleinspritzanordnung (20) umfasst, wobei die Reaktionsmittelpumpe (24) dazu ausgebildet ist, einen über einem Dampfdruck des durch die Heizanordnung (18) erwärmten Reaktionsmittels (R) liegenden Reaktionsmitteldruck zu erzeugen.

3. Vorrichtung nach Anspruch 1 oder 2, **dadurch gekennzeichnet, dass** die Reaktionsmittelpumpe (24) eine kontinuierlich fördernde Pumpe, vorzugsweise Zahnradpumpe, umfasst.

4. Vorrichtung nach einem der Ansprüche 1-3, **dadurch gekennzeichnet, dass** stromabwärts der Reaktionsmittelförderanordnung (12) ein Überdruckventil (26) vorgesehen ist.

5. Vorrichtung nach einem der Ansprüche 1-4, dass ein durch die Druckspeicheranordnung (30) bereitgestelltes Reaktionsmittelpuffervolumen derart bemessen ist, dass folgende Bedingung erfüllt ist:

$$V_P > V_E - V_N$$

wobei:

Vp das Reaktionsmittelpuffervolumen ist,
$V_E$ das bei einem Reaktionsmitteleinspritzvorgang durch die Reaktionsmitteleinspritzanordnung (20) abgegebene Reaktionsmittelvolumen ist,
$V_N$ das bei einem Reaktionsmitteleinspritzvorgang durch die Reaktionsmittelförderanordnung (12) nachgeförderte Reaktionsmittelvolumen ist.

6. Vorrichtung nach einem der Ansprüche 1-5, **dadurch gekennzeichnet, dass** die Ansteueranordnung zum Ansteuern der Heizanordnung (18), auf Grundlage einer Reaktionsmitteltemperatur im Bereich der Heizanordnung (18) oder/und der Reaktionsmittelabgabeanordnung (20) oder/und auf Grundlage einer Soll-Reaktionsmitteltemperatur ausgebildet ist, oder/und zum Ansteuern der Reaktionsmittelförderanordnung (12) auf Grundlage eines Reaktionsmitteldrucks im Bereich der Heizanordnung (18) oder/und der Reaktionsmitteleinspritzanordnung (20) oder/und auf Grundlage eines Soll-Reaktionsmitteldrucks.

**7.** Abgasanlage für eine Brennkraftmaschine, umfassend einen Abgasführungskanal und eine Vorrichtung (10) nach einem der vorangehenden Ansprüche zum Abgeben von Reaktionsmittel in in dem Abgasführungskanal strömendes Abgas (A).

**Claims**

**1.** Device for releasing reactant (R) into the exhaust gas stream (A) of an internal combustion engine, comprising a reactant injection arrangement (20), a reactant delivery arrangement (12) for delivering reactant (R) from a reactant reservoir (14) to the reactant injection arrangement (20), a heating arrangement (18) for heating reactant (R) delivered by the reactant delivery arrangement (12) to the reactant injection arrangement (20), an actuating arrangement (32) for actuating the reactant delivery arrangement (12), the heating arrangement (18) and the reactant injection arrangement (20), **characterized in that** a pressure storage arrangement (30) is provided wherein the pressure storage arrangement (30) comprises a compressible pressure storage element (56) provided in a discharge chamber (46) of the reactant injection arrangement (20).

**2.** Device in accordance with claim 1, **characterized in that** the reactant delivery arrangement (12) comprises a reactant pump (22) for delivering reactant (R) to the reactant injection arrangement (20), the reactant pump (24) being configured to generate a reactant pressure lying above a vapor pressure of the reactant (R) heated by the heating arrangement (18).

**3.** Device in accordance with claim 1 or 2, **characterized in that** the reactant pump (24) comprises a continuously delivering pump, preferably a gear pump.

**4.** Device in accordance with one of the claims 1-3, **characterized in that** an overpressure valve (26) is provided downstream of the reactant delivery arrangement (12).

**5.** Device in accordance with one of the claims 1-4, **characterized in that** a reactant buffer volume provided by the pressure storage arrangement (30) is measured such that the following condition is met:

$$V_P > V_E - V_N$$

in which:

$V_P$ is the reactant buffer volume,
$V_E$ is the reactant volume released by the reactant injection arrangement (20) during a reactant injection operation,
$V_N$ is the reactant volume delivered by the reactant delivery arrangement (12) during a reactant injection operation.

**6.** Device in accordance with one of the claims 1-5, **characterized in that** the actuating arrangement is configured for actuating the heating arrangement (18) on the basis of a reactant temperature in the area of the heating arrangement (18) or/and of the reactant release arrangement (20) or/and on the basis of a desired reactant temperature, or/and for actuating the reactant delivery arrangement (12) on the basis of a reactant pressure in the area of the heating arrangement (18) or/and of the reactant injection arrangement (20) or/and on the basis of a desired reactant pressure.

**7.** Exhaust system for an internal combustion engine, comprising an exhaust gas-carrying duct and a device (10) in accordance with one of the above claims for releasing reactant into exhaust gas (A) flowing in the exhaust gas-carrying duct.

**Revendications**

**1.** Dispositif pour délivrer un réactif (R) dans le courant de gaz d'échappement (A) d'un moteur à combustion, comprenant un arrangement d'injection de réactif (20), un arrangement de transport de réactif (12) pour transporter du réactif (R) d'un réservoir de réactif (14) à l'arrangement d'injection de réactif (20), un arrangement de chauffage (18) pour chauffer du réactif (R) transporté par l'arrangement de transport de réactif (12) à l'arrangement d'injection de réactif (20), un arrangement de commande (32) pour commander l'arrangement de transport de réactif (12), l'arrangement de chauffage (18) et l'arrangement d'injection de réactif (20), **caractérise en ce qu'**en aval de l'arrangement de transport de réactif (12) un arrangement de réservoir sous pression (30) est prévu, l'arrangement de réservoir sous pression (30) comprenant un élément de réservoir sous pression compressible (56) prévu dans une chambre de décharge (46) de l'arrangement d'injection de réactif (20).

**2.** Dispositif selon la revendication 1, **caractérisé en ce que** l'arrangement de transport de réactif (12) comprend une pompe de réactif (22) pour transporter du réactif (R) envers l'arrangement d'injection de réactif (20), la pompe de réactif (24) étant adaptée pour générer une pression de réactif plus grande que la pression de vapeur du réactif (R) chauffé par l'arrangement de chauffage (18).

3. Dispositif selon les revendications 1 ou 2, **caractérisé en ce que** la pompe de réactif (24) comprend une pompe transportant en continu, de préférence une pompe à engrenages.

4. Dispositif selon une des revendications 1-3, **caractérisé en ce qu'**une soupape de surpression (26) est prévue en aval de l'arrangement de transport de réactif (12).

5. Dispositif selon une des revendications 1-4, **caractérisé en ce qu'**un volume tampon de réactif prévu par l'arrangement de réservoir sous pression (30) est dimensionné tel que la condition suivantes est remplie:

$$V_P > V_E - V_N$$

où:

V_P représente le volume tampon de réactif,
V_E représente le volume de réactif délivré lors d'une opération d'injection de réactif (20),
V_N représente le volume de réactif transporté par l'arrangement de transport de réactif (12) lors d'une opération d'injection de réactif.

6. Dispositif selon une des revendications 1-5, **caractérisé en ce que** l'arrangement de commande est adapté pour commander l'arrangement de chauffage (18) sur la base d'une température de réactif dans la région de l'arrangement de chauffage (18) ou/et de l'arrangement de décharge de réactif (20) ou/et sur la base d'une température désirée du réactif ou/et pour commander l'arrangement de transport de réactif (12) sur la base d'une pression de réactif dans la région de l'arrangement de chauffage (18) ou/et de l'arrangement d'injection de réactif (20) ou/et sur la base d'une pression désirée du réactif.

7. Système d'échappement pour un moteur à combustion interne, comprenant un canal de guidage de gaz d'échappement et un dispositif (10) selon une des revendications précédentes pour délivrer du réactif dans du gaz d'échappement s'écoulant dans le canal de guidage de gaz d'échappement (A).

Fig. 1

Fig. 2

**IN DER BESCHREIBUNG AUFGEFÜHRTE DOKUMENTE**

**In der Beschreibung aufgeführte Patentdokumente**

- DE 102006049591 A1
- DE 102013211182 A1
- DE 10346220 A1
- US 20110179772 A1